Europäisches Patentamt

European Patent Office

Office européen des brevets

(11) Veröffentlichungsnummer: **0 491 255 A2**

## EUROPÄISCHE PATENTANMELDUNG

(21) Anmeldenummer: **91121023.5**

(51) Int. Cl.5: **G01B 11/24**

(22) Anmeldetag: **07.12.91**

(30) Priorität: **19.12.90 DE 4040608**

(43) Veröffentlichungstag der Anmeldung:
**24.06.92 Patentblatt 92/26**

(84) Benannte Vertragsstaaten:
**AT BE CH DE DK ES FR GB GR IT LI LU NL SE**

(71) Anmelder: **HARTMETALLWERKZEUGFABRIK ANDREAS MAIER GMBH + CO KG**
**Stegwiesen 2**
**W-7959 Schwendi-Hörenhausen(DE)**

(72) Erfinder: **Maier, Andreas**
**Stegwiesen 2**
**W - 7959 Schwendi-Hörenhausen(DE)**

(54) Verfahren zum Messen der Konturen eines Körpers.

(57) Verfahren zum Messen, vorzugsweise optischen Abtasten der Konturen eines Körpers, insbesondere eines rotatorisch arbeitenden, spangebenden Werkzeuges, mit wenigstens einer Kamera, wobei die Meßdaten der Kamera und/oder einer Wegmeßeinrichtung in einen Computer übertragen werden und dort mit Hilfe eines CAD-Programmes weiterverarbeitet werden.

Fig. 2

EP 0 491 255 A2

Die Erfindung betrifft ein Verfahren zum Messen, vorzugsweise optischen Abtasten der Konturen eines Körpers, insbesondere eines rotatorisch arbeitenden, spangebenden Werkzeuges, mit wenigstens einer Kamera.

Der Erfindung liegt die Aufgabe zugrunde, ein derartiges Verfahren so auszugestalten, daß die ermittelte Körper-Kontur auch ausgewertet werden kann.

Diese Aufgabe wird erfindungsgemäß dadurch gelöst, daß die Meßdaten der Kamera und/oder einer Wegmeßeinrichtung in einen Computer übertragen werden und dort mit Hilfe eines CAD-Programmes weiterverarbeitet werden.

Mit diesem CAD-Programm ist es dann möglich, anhand der ermittelten einzelnen Meßwerte die Konturen des Körpers aufzuzeigen und mit vorgegebenen Werten zu vergleichen.

Dabei hat es sich als sehr vorteilhaft erwiesen, wenn erfindungsgemäß, die von der Kamera bzw. einer Wegmeßeinrichtung ermittelten Meßdaten eines Körpers in einen Computer eingespeist und dort als Solldaten gespeichert werden.

Damit stehen diese Meßdaten jederzeit für Vergleiche und spezielle Auswertungen zur Verfügung.

Weiterhin sehr vorteilhaft ist es, wenn gemäß der Erfindung die Meßdaten eines Musterkörpers in das CAD-Programm des Computers eingespeist und dort für Vergleichszwecke gespeichert werden.

Anhand dieser Solldaten des Musterkörpers können dann weitere Körper ausgemessen und verglichen werden.

Als ebenfalls sehr günstig hat es sich erwiesen, wenn erfindungsgemäß die Meßdaten eines zur Produktion vorgesehenen Körpers in das CAD-Programm des Computers eingespeist und gespeichert werden und für spätere Nachkontrollen insbesondere im Anschluß an eine Nachbearbeitung wie z.B.Nachschleifen des Körpers als Vergleichswerte zur Verfügung stehen.

In der Zeichnung ist die Erfindung anhand eines Ausführungsbeispiels veranschaulicht. Dabei zeigen:

Fig.1    ein Schaubild einer Meßmaschine zum Abtasten der Konturen eines Körpers, mit wenigstens einer Kamera,

Fig.2    einen schematisch dargestellten Arbeitsplatz zur Auswertung der Meßdaten der Meßmaschine und

Fig.3    ein mit einem CAD-Programm erstelltes Datenblatt einer Werkstückvermessung.

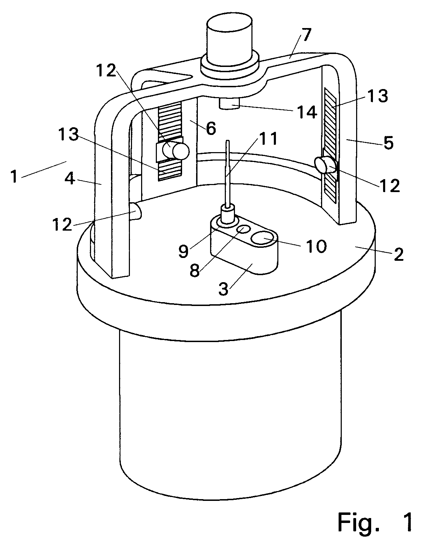

Mit 1 ist in Fig.1 eine Meßmaschine bezeichnet, die mit einem Tisch 2 versehen ist, auf dem ein Schlitten 3 gelagert ist und der eine Dreibeinkonstruktion trägt, deren drei Schenkel 4,5,6 um jeweils 90° zueinander versetzt angeordnet sind. An ihrem oberen, vom Tisch abgewandten Ende sind die drei Schenkel über einen T-förmigen Verbindungssteg 7 miteinander verbunden. Der Schlitten 3 ist um eine Achse 8 drehbar und weist zwei Aufnahmen 9 bzw. 10 für zu messende Körper 11 auf. Darüber hinaus kann der Schlitten 3 längsverstellbar und schwenkbar und darüber hinaus höhenverstellbar ausgebildet sein. An den drei Schenkeln sind Kameras 12 angeordnet, die auf Fahrbahnnen 13 über nicht dargestellte Verstellmotoren in der Höhe verfahrbar sind. Im Verbindungssteg 7 ist eine weitere Kamera 14 angeordnet, die vertikal nach unten auf den Körper 11 ausgerichtet ist. Zum Durchführen des erfindungsgemäßen Verfahrens kann es jedoch auch ausreichend sein, eine einzige Kamera und eine entsprechende Lichtquelle vorzusehen.

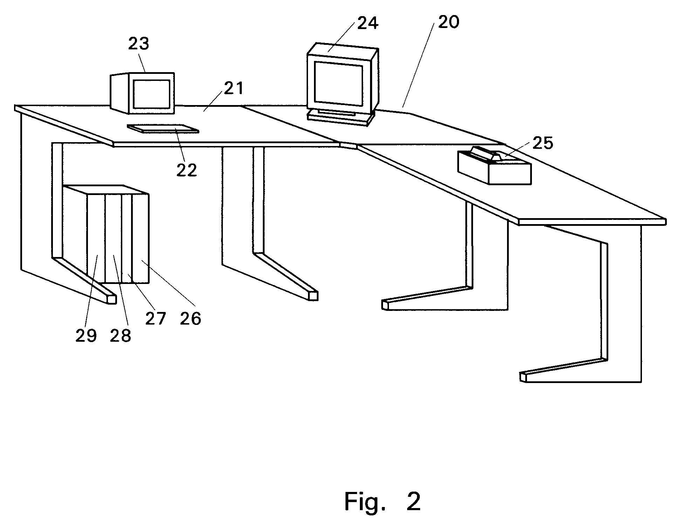

In Fig.2 ist ein Arbeitsplatz 20 dargestellt, der mit einem konfentionellen Arbeitstisch 21, einer Eingabetastatur 22, einem Kontrollmonitor 23, einem Bildschirm 24 für die Wiedergabe der Auswertedaten sowie einem Drucker 25 ausgerüstet ist. Darüber hinaus sind noch ein Netzteil 26 zur Stromversorgung, ein Bildverarbeitungsgerät 27, ein Rechner 28 sowie ein Steuergerät 29 für die Ansteuerung der Verstellmotoren vorgesehen.

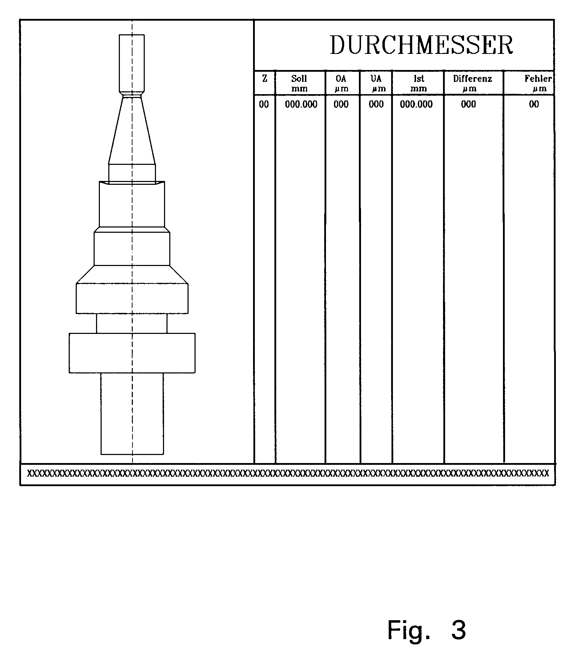

In den Rechner ist ein CAD-Programm geladen, das aus den von der Kamera ermittelten Meßwerten des Körpers 11 Meßkonturen errechnet und aufzeigt, wie ein in Fig.3 dargestellt ist. Darüber hinaus ermittelt dieses CAD-Programm verschiedene Vergleichstabellen wie sie ebenfalls in Fig.3 angedeutet sind und gibt an, ob der vermessene Körper den Sollbedingungen entspricht, nachgearbeitet werden muß und kann oder nicht mehr verwendet werden kann. Es ist auch möglich, mit Hilfe dieses CAD-Programms Vergleichskurven auszuarbeiten und aufzuzeigen, mit denen Abweichungen von Sollwerten dargestellt werden. Als Sollwerte können dabei die Ursprungsdaten des vermessenen Körpers oder die eines Musterkörpers dienen.

Darüber hinaus ist es mit einem derartigen CAD-Programm möglich, Abweichungen von den Sollwerten zu ermitteln und in deren Abhängigkeit Werte auszugeben, entsprechend denen eine Vorrichtung nachzujustieren ist, in welcher der Körper zu Einsatz kommen soll. Dies hat sich besonders bei der Vermessung von Bohrern, Fräsern und dergleichen bewährt, mit denen Präzisions-Bearbeitungen vorgenommen werden sollen.

**Patentansprüche**

1.    Verfahren zum Messen, vorzugsweise optischen Abtasten der Konturen eines Körpers, insbesondere eines rotatorisch arbeitenden, spangebenden Werkzeuges, mit wenigstens einer Kamera, **dadurch gekennzeichnet,** daß die Meßdaten der Kamera und/oder einer Wegmeßeinrichtung in einen Computer übertragen werden und dort mit Hilfe eines CAD-Programmes weiterverarbeitet werden.

2. Verfahren nach Anspruch 1, **dadurch gekennzeichnet,** daß die von der Kamera bzw. einer Wegmeßeinrichtung ermittelten Meßdaten eines Körpers in einen Computer eingespeist und dort als Solldaten gespeichert werden.

3. Verfahren nach Anspruch 2, **dadurch gekennzeichnet,** daß die Meßdaten eines Musterkörpers in das CAD-Programm des Computers eingespeist und durch für Vergleichszwecke gespeichert werden.

4. Verfahren nach Anspruch 2, **dadurch gekennzeichnet,** daß die Meßdaten eines zur Produktion vorgesehenen Körpers in das CAD-Programm des Computers eingespeist und gespeichert werden und für spätere Nachkontrollen insbesondere im Anschluß an eine Nachbearbeitung wie z.B.Nachschleifen des Körpers als Vergleichswerte zur Verfügung stehen.

Fig. 1

Fig. 2

# DURCHMESSER

| Z | Soll mm | OA μm | UA μm | Ist mm | Differenz μm | Fehler μm |
|---|---------|-------|-------|--------|--------------|-----------|
| 00 | 000.000 | 000 | 000 | 000.000 | 000 | 00 |

XXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXXX

Fig.  3